Europäisches Patentamt

European Patent Office

Office européen des brevets

(11) Publication number: **0 333 097**
**A2**

(12) **EUROPEAN PATENT APPLICATION**

(21) Application number: **89104397.8**

(51) Int. Cl.⁴: **F02M 47/02**

(22) Date of filing: **13.03.89**

(30) Priority: **14.03.88 JP 58176/88**

(43) Date of publication of application:
**20.09.89 Bulletin 89/38**

(84) Designated Contracting States:
**DE GB**

(71) Applicant: **YAMAHA MOTOR CO., LTD.**
**2500 Shingai**
**Iwata-shi Shizuoka-ken, 438(JP)**

(72) Inventor: **Taue, Jun**
**175 Kodateno Toyoda-cyo**
**Iwata-gun Shizuoka-ken(JP)**
Inventor: **Yoshida, Takeo**
**3643-27, Nishikaizuka**
**Iwata-shi Shizuoka-ken(JP)**

(74) Representative: **Patentanwälte Grünecker,**
**Kinkeldey, Stockmair & Partner**
**Maximilianstrasse 58**
**D-8000 München 22(DE)**

(54) **Relief valve assembly for accumulator type fuel injection nozzle.**

(57) An improved relief valve element for an accumulator type fuel injection nozzle. The relief valve element and relief valve seat are formed with a substantially greater effective sealing area than the port which is controlled. Pressure relief passages extend through either the valve element or the valve seat outwardly of the control port so as to permit fluid to flow therethrough upon the closure movement of the valve element to facilitate its movement and to assist in sealing.

FIG.1

## RELIEF VALVE ASSEMBLY FOR ACCUMULATOR TYPE FUEL INJECTION NOZZLE

Background of the Invention

This invention relates to a relief valve assembly for an accumulator type fuel injection nozzle and more particularly to an improved valve that increases sealing and which prevents fluctuations in valve operation.

A well known and popular type of fuel injector is the so-called accumulator type. With this type of fuel injector there is provided an accumulator chamber that is charged with fuel under pressure. The flow controlling injector valve of this nozzle has an actuator that is mounted in a small control chamber that is also pressurised with fuel under pressure. When it is desired to inject fuel, the pressure in the control chamber is rapidly reduced by opening a relief valve for that chamber and the pressure in the accumulator chamber opens the injector valve and permits the fuel to be discharged. Discharge is stopped by the closing of the relief valve.

Although this type of injection nozzle has great utility, the operation of the relief valve is, of course, very critical to the successful operation. It must be ensured that the relief valve is opened and closed accurately at the proper time, that it seats effectively and that it does not fluctuate in operation. Because of the rapid opening and closing of the relief valve, there is a likelihood that the inertia of the valve may cause the valve to bounce open again after it closes.

It is therefore a principal object of this invention to provide an improved relief valve assembly for an accumulator type fuel injection nozzle. It is a further object of this invention to provide a relief valve assembly for such a nozzle that is accurate in operation, seals well and will not fluctuate in its operation.

This invention is adapted to be embodied in an accumulator type of injection nozzle that is comprised of an accumulator chamber that is adapted to be supplied with high pressure fuel. A nozzle port leads from the accumulator chamber and an injection valve is moveable between a closed position and an open position for controlling the discharge of fuel from the accumulator chamber through the nozzle port. A control chamber is also incorporated that receives pressurised fuel and a control member is supported for movement within the control chamber and is associated with the injector valve for retaining the injector valve in its closed position when the control chamber is pressurised and for movement of the injector valve to its open position when pressure is relieved in the control chamber. A relief valve means is moveable between a closed position for maintaining pressure in the control chamber and an opened position for relieving pressure in the control chamber for effecting fuel discharge through the nozzle port. The relief valve is comprised of a valve seat having a relief valve port that communicates with the control chamber and which is surrounded by a relief valve seating area. A relief valve element is moveable between the opened and closed positions and is adapted when in its closed position to sealingly engage the relief valve port for controlling the flow therethrough. The relief valve element has a surface area facing the relief valve seating area that is substantially greater than the effective area of relief valve port. Pressure passages are formed in at least one of the relief valve seat and the relief valve element for permitting fluid to flow away from the relief valve port as the relief valve element approaches the relief valve seat to increase sealing pressure and to facilitate such movement.

Brief Description of the Drawings

Fig 1 is a cross-sectional view taken through an accumulator type fuel injection nozzle constructed in accordance with an embodiment of the invention and shown schematically associated with the associated fuel circuit.

Fig 2 is an enlarged cross-sectional view of the relief valve element.

Fig 3 is an enlarged top plan view, on the same scale as Fig 2, of the relief valve seat and closure plate.

Fig 4 is a cross-sectional view taken along the line IV-IV of Fig 3.

Fig 5 is a partial top plan view showing another possible configuration for a relief valve seating surface.

Fig 6 is a partial top plan view, in part similar to Figs 3 and 5, showing another embodiment.

Fig 7 is a partial top plan view, similar in part to Figs 3, 5 and 6, showing a further embodiment of the invention.

Detailed Description of the Preferred Embodiments

Referring to the drawings, a fuel injection nozzle constructed in accordance with an embodiment of the invention is identified generally by the reference numeral 11. The injection nozzle 11 is comprised of an outer housing assembly, indicated generally by the reference numeral 12 that is adapted to be mounted, in a manner to be described, in the cylinder head of an internal combustion engine with a nozzle port 13 communicating with the combustion chamber for delivering fuel to it in a manner to be described. Rather than direct cylinder injection, the invention may be utilised in conjunction with manifold injection systems but the invention has particular utlity with direct injection, for example, as used with high speed diesel engines.

Fuel is supplied to the injection nozzle 11 from a remotely positioned fuel tank 14 by means of a high pressure pump 15. Excess control fuel is returned back to reservoir 14 through a return line 16. The fuel delivery and return systems per se form no part of the invention and, for that reason, they have been illustrated only schematically.

The outer housing 12 is comprised of a lower piece 17 that has a threaded lower end 18 that is adapted to be threaded into a suitable aperture in the cylinder head of the associated engine (not shown) in a known manner. The nozzle port 13 is defined by a tip 19 that has a threaded portion 21 that is received in a threaded bore 22 formed at the lower end of the housing piece 17. An adjusting shim 23 is interposed between the nozzle piece 19 and housing 17 for length adjustment.

An injection valve 24 is slidably supported within a bore 25 of the nozzle piece 19 and has a reduced diameter portion 26 and a flow controlling tip 27 which, in the closed position, closes the injection nozzle port 13. The valve portion 26 has interrupted enlargements for slidably supporting the injection valve 24 in the bore 25 in a known manner.

An accumulator chamber 28 is formed above the bore 25 by the housing piece 17. The accumulator chamber 28 is closed at its upper end by means of a closure plate 29 that is held against a shoulder in the housing piece 17 by a second housing piece 31. The housing piece 31 has a threaded portion 32 that is received within a threaded bore 33 of the housing piece 17 so as to hold the closure plate 29 in position and maintain the chamber 28 in a sealed condition, except as is hereinafter noted. Externally of the threaded opening 33, the housing piece 17 is formed with a hexagonal portion 34 so as to facilitate its insertion into the threaded bore of the cylinder head.

The housing piece 31 is formed with an inlet conduit 35 that has a threaded external portion 36 so as to receive a fitting for connecting a supply line 37 extending from the pressure pump 15 to the inlet conduit 35.

The inlet conduit 35, which is generally a drilled opening, is intersected by a further drilled passageway 38 that extends axially along the housing piece 31 at one side thereof and which communicates at its lower end with a corresponding circumferential groove 39 formed in the upper face of the closure plate 29. The groove 39 is intersected by a radially extending bore 41 which, in turn, has tapped into it a metering jet 42 for delivering fuel under pressure to the accumulator chamber 28.

A control chamber 43 is formed in the closure plate 29 by means of a bore 44 that opens through the lower end of the closure plate. The injection valve 24 has a generally cylindrical actuator portion 45 that is slidably supported within the bore 44 and which closes the lower end of the control chamber 43. A restricted orifice 46 fixed in the end of the actuator portion 45 communicates an axial passage 47 of the portion 45 and radial port 48 with the passage 41. The control chamber 43 communicates with the orifice 46 to receive the pressurised fluid and normally urge the injection valve 24 toward its downward or closed position.

A coil compression spring 49 encircles the injection valve 24 and bears against the closure plate 29 at its upper end. The lower end of the spring 49 engages a cup shaped retainer 51 that is held axially in position against a shoulder formed by an enlargement 52 on the injection valve 24 so as to further assist in maintaining the injection valve 24 in the closed position as shown in the drawings.

A relief valve 53 is supported within the upper end of the closure plate 29 and controls the opening of a relief valve port 54 formed in the upper end of the closure plate 29 and communicating with the control chamber 43. The relief valve 53 comprises a headed portion that is received within a corresponding recess 54 formed in an enlarged disk like armature plate 55. The relief valve 53 is biased toward its closed position with the relief valve port 54 in a manner to be described.

The relief valve 53 when opened will permit the fuel in the control chamber 43 to return to the tank 14 through a return fitting 57 that extends axially through the end of the housing piece 31 parallel to the inlet passageway 35. The return passageway 57 communicates with the conduit 16. Fuel can flow from the relief valve port 54 to the return passageway 57 through suitable internal passageways or clearances to permit this return flow, which is relatively small in volume.

The relief valve 53 is opened and closed so as to control the discharge of fuel from the nozzle port 13 by means of an electromagnetic assembly, indicated generally by the reference numeral 58. This electromagnetic assembly 58 includes a generally cylindrical yoke 59 that has a threaded opening at an enlarged diameter lower end portion 61 which is received on a threaded portion of the closure plate 29 so as to secure the electromagnetic assembly 58 in position.

The eletromagnetic assembly 58 is comprised of a solenoid coil or winding 62 that is disposed at the lower end of the housing or yoke 59 and which encircles an armature 63. The armature 63 is formed with a bore that slidably supports a plunger 64 which acts against a small pilot portion 53a of the relief valve 53. An enlarged portion 65 is affixed to the upper end of the plunger 64 and is received within a recess 60 formed at the base of a counter bore formed in the upper end of the armature 63. A coil compression spring 66 is received in this counter bore and is preloaded by means of an adjustable screw 67 so as to apply a preset closing biasing force on the relief valve 53 so as to hold it in the closed position as aforenoted.

The yoke 59 of the electromagnet 58 has an upper portion 68 which is also cylindrical in shape but which is reduced in diameter from the mounting portion 61 and is of substantially lesser diameter than the bore of the housing piece 31 in which it is received. This provides a clearance 71 which, as will be noted, will prevent the transmission of stray flux paths to the housing 12.

The yoke parts 68 and 61 are connected to each other by means of an intermediate part 72 that extends radially inwardly in proximity to the lower end of the winding 62 and immediately above the armature 55 of the relief valve 53. This provides a concentrated flux path between the armature 63 of the electromagnet 58 and the armature 55 of the relief valve 53. In order to reduce the transmission of flux to the housing piece 31, the intermediate portion 72 is provided with weakened or reduced portions that interconnect it to the remaining components so as to provide the aforenoted result.

A circuit is provided for energising the coil 62 of the electromagnet assembly 58 for opening the relief valve 53. This circuit includes a part of terminal posts 75 (one of which appears in the drawings) that extend through the upper end of the housing piece 31 and the terminal posts 75. Electrical tab connectors 77 are held on the posts 75 in electrical contact with them between a respective pair of nuts 78 so as to afford attachment to an appropriate lead of a circuit (not shown). A wire 79 is connected to the post 75 to complete the connection to the winding 62.

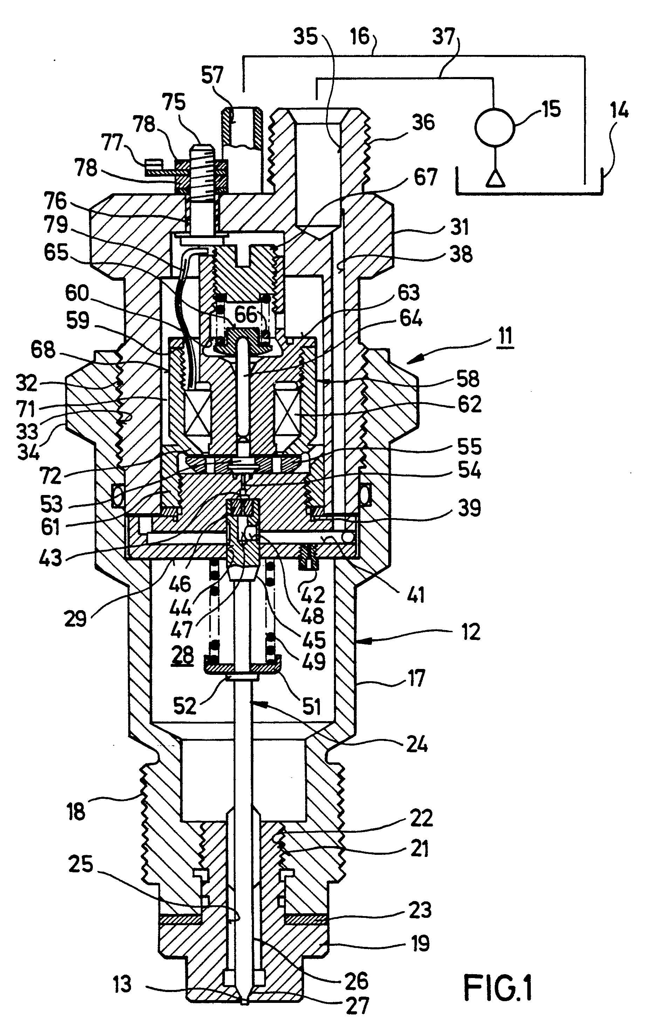

The condition shown in Fig 1 is that which occurs when the winding 62 is de-energised. When the winding 62 is de-energised, the relief valve 51 will be held in its closed position by the spring 66 so that the accumulator chamber 28 and control chamber 43 may be pressurised.

At the appropriate instant for fuel injection to begin, which may be controlled in any suitable strategy, the winding 62 is energised. When this happens, the relief valve armature 55 will be attracted upwardly by the flux in the armature 63 so as to urge the valve portion 64 upwardly and open the relief valve 53 against the action of the spring 66. The pressure in the control chamber 43 will then be rapidly depleted and the higher pressure of the fuel acting in the accumulator chamber 28 will urge the injection valve 24 upwardly and permit fuel to issue from the nozzle port 13. When the fuel pressure in the accumulator chamber 28 has been depleted, the spring 66 will move the injection valve 24 to its closed position and the fuel pressure can then build up in the accumulator chamber 28. This action is initiated by discontinuing the energisation of the winding 62 so as to close the relief valve 51 and permit pressure in the control chamber 43 to again build up.

It should be readily apparent that the action of the spring 66 on the relief valve 53 will provide significant force to urge it in the closed position. However, it is desirable to provide good sealing and to that end the closure plate 29 has a relatively large sealing area 81 that faces the relief valve armature 55. The relief valve 53 and the armature 55 is provided with an enlarged sealing area 82 that will engage and seal against the seat 81, this area being substantially larger than the relief valve port 54. However, the large area of the armature 55 and its inertia is likely to cause bouncing of the valve when it is forced closed which can cause leakage from the control chamber 43 and improper injection control. In addition, because of the large sealing areas provided, the fluid which must be displaced between these areas can offer some resistance to the movement of the relief valve 53 to its closed position.

In order to provide increased sealing pressure and to relieve this flow, there are provided generally radially extending cross slots 83 and 84 in either the armature face 82 or the closure plate face 81. In the illustrated embodiment, the grooves 83 and 84 are formed in the closure plate 29. It should be noted that these grooves do not intersect the relief valve port 54 so there can be no leakage. However, the slots 83 and 84 will permit fluid to readily be displaced from this area and will, in fact, provide a reduced pressure action that will increase the sealing pressure on the valve and prevent leakage.

In the embodiment thus far described, there have been two cross slots 83 and two cross slots 84 that extend at right angles to permit this flow. Fig 5 shows another embodiment wherein there are a greater number of cross slots 101 and 102 which extend at right angles to each other.

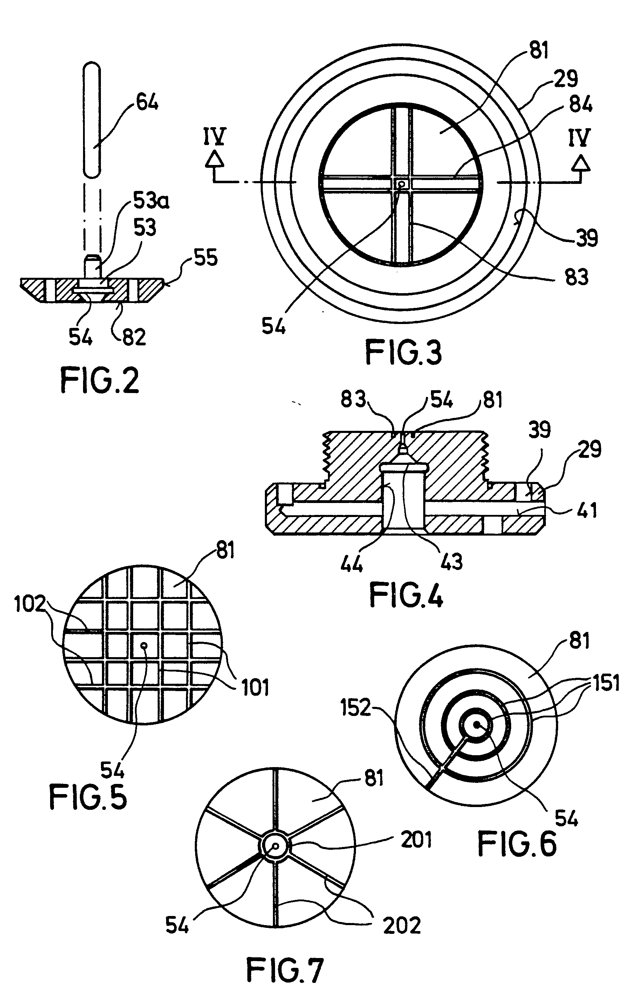

Fig 6 shows another embodiment wherein, rather than perpendicularly extending cross slots, there are provided a plurality of circumferential recesses 151 that extend circumferentially around the nozzle port 54 at progressively increasing diameters. In order to permit the fluid to flow freely, these circumferential slots 151 are interconnected by at least one radially extending slot 152 so as to permit the fluid to escape. Obviously, additional radially extending slots may be formed if desired.

Fig 7 shows another embodiment of the invention wherein there is provided only one circumferentially extending slot 201 and a plurality of radially extending slots 202. Again, the slots 201 and 202 do not intersect the nozzle port 54 and thus do not provide a path for leakage.

When the relief valve element 53 is moved to its open position, fluid may flow back into the area between the valve seat surface 81 and the valve element surface 82 through the described passageways so as to ensure that the relief valve 53 can be rapidly opened.

It should be readily apparent from the foregoing description that several embodiments of the invention have been illustrated and described, each of which provides a very effective arrangement for ensuring good and quick movement of the relief valve while also ensuring that the relief valve will be held in its closed position as soon as it moves there and will not fluctuate. Although a number of embodiments of the invention have been illustrated and described, various changes and modifications may be made without departing from the spirit and scope of the invention, as defined by the appended claims.

## Claims

1. An accumulator type of injection nozzle comprised of an accumulator chamber adapted to be supplied with high pressure fuel, a nozzle port leading from said accumulator chamber, an injector valve moveable between a closed position and an opened position for controlling the discharge of fuel from said accumulator chamber through said nozzle port, a control chamber for receiving pressurised fuel, an actuating member supported for movement within said control chamber and associated with said injector valve for retaining said injector valve in its closed position when said control chamber is pressurised and for movement of said injector valve to its opened position when pressure is relieved in said control chamber, and relief valve means moveable between a closed position for maintaining pressure in said control chamber and an opened position for relieving said control chamber for effecting fuel discharge through said nozzle port, the improvement comprising said relief valve comprising a valve seat having a relief valve port communicating with said control chamber and surrounded by a relief valve seating area, a relief valve element moveable between the open and closed positions, said relief valve element being adapted when in its closed position to sealingly engage said relief valve port for controlling the flow therethrough, said relief valve element having a surface area facing said relief valve area of substantially greater effective area than said relief valve port, and pressure relief passages formed in at least one of said relief valve seat and said relief valve element for permitting fluid to flow away from said relief valve port as said relief valve element approaches said relief valve seat to increase sealing pressure and facilitate such movement.

2. An accumulator type of injection nozzle as set forth in claim 1, wherein the pressure relief passages comprise a plurality of cross passages that do not intersect the relief valve port when the relief valve element is in its closed position.

3. An accumulator type of injection nozzle as set forth in claim 1, wherein the pressure relief passages comprise a plurality of radially extending passages that do not intersect the relief valve port when the relief valve element is in its closed position.

4. An accumulator type of injection nozzle as set forth in claim 3 wherein the radially extending passages emanate from a circumferential passage surrounding and spaced outwardly of the relief valve port when the relief valve element is in its closed position.

5. An accumulator type of injection nozzle as set forth in claim 1, wherein the pressure relief valve passages comprise a plurality of circumferentially extending passages formed outwardly of the relief valve port when the relief valve element is in its closed position and at least one radially extending passage intersecting all of said circumferentially extending passages.

6. An accumulator type of injection nozzle as set forth in claim 1, wherein the pressure relief valve passages are formed in the relief valve seat.

7. An accumulator type of injection nozzle as set forth in claim 6, wherein the pressure relief passages comprise a plurality of cross passages that do not intersect the relief valve port when the relief valve element is in its closed position.

8. An accumulator type of injection nozzle as set forth in claim 6, wherein the pressure relief passages comprise a plurality of radially extending passages that do not intersect the relief valve port when the relief valve element is in its closed position.

9. An accumulator type of injection nozzle as set forth in claim 8, wherein the radially extending passages emanate from a circumferential passage surrounding and spaced outwardly of the relief valve port when the relief valve element is its closed position.

10. An accumulator type of injection nozzle as set forth in claim 6, wherein the pressure relief valve passages comprise a plurality of circumferentially extending passages formed outwardly of the relief valve port when the relief valve element is in its closed position and at least one radially extending passage intersecting all of said circumferentially extending passages.

FIG.1

FIG.2

FIG.3

FIG.4

FIG.5

FIG.6

FIG.7